# EUROPÄISCHE PATENTSCHRIFT

(11) **EP 2 062 105 B1**
(45) Veröffentlichungstag und Bekanntmachung des Hinweises auf die Patenterteilung: **07.08.2019**
(21) Anmeldenummer: 07801780.3
(22) Anmeldetag: 21.08.2007
(51) Int. Cl.: G05B 19/042, G06F 9/445

(54) **SYSTEM UND VERFAHREN ZUR BEDARFSGERECHTEN FUNKTIONALISIERUNG VON STEUER- / REGELEINRICHTUNGEN**
SYSTEM AND METHOD FOR FUNCTIONALIZATION IN LINE WITH DEMAND, FOR CONTROL AND REGULATORY DEVICES
SYSTÈME ET PROCÉDÉ DE FONCTIONNALISATION EN FONCTION DU BESOIN DE DISPOSITIFS DE COMMANDE/RÉGULATION

(30) Priorität: 15.09.2006 DE 102006044182
(43) Veröffentlichungstag der Anmeldung: 27.05.2009
(73) Patentinhaber: ABB AG, 68526 Ladenburg (DE)
(72) Erfinder: HERMANN, Wolfgang, 69126 Heidelberg (DE)
(74) Vertreter: Marks, Frank
(86) Internationale Anmeldenummer: PCT/EP2007/007342
(87) Internationale Veröffentlichungsnummer: WO 2008/031489

(56) Entgegenhaltungen:
- US-A- 5 909 368
- US-A1- 2006 015 844

## Beschreibung

Die Erfindung betrifft ein System sowie ein Verfahren zur bedarfsgemäßen Funktionalisierung von Steuer- und/oder Regeleinrichtungen, insbesondere von Motorsteuergeräten, gemäß den Oberbegriffen der unabhängigen Ansprüche.

Herkömmlich werden Steuer-/Regeleinrichtungen, wie beispielsweise Motorkontroller, mit einem festgelegten, vorbestimmten Funktionsumfang eingesetzt, wobei der Funktionsumfang im wesentlichen durch die implementierte Firmware, das heißt, die dem Festspeicher des Gerätes einmal aufgeprägte und dessen Betriebsart- und/oder Betriebsweise bestimmende Programmkomponente, festgelegt wird. Um ein gewisses Spektrum an unterschiedlichen Funktionalitäten abzudecken, werden daher in aller Regel ganze Gerätefamilien hergestellt, deren einzelne Familienmitglieder jeweils eine unterschiedlich ausgestaltete Firmware und damit auch unterschiedliche Funktionsumfänge aufweisen.

Es sei darauf hingewiesen, dass nachfolgend die Begriffe Motorsteuergerät, Motorkontroller und Motorcontroller synonym verwendet werden.

So erfreuen sich beispielsweise Niederspannungs-Motor-Control-Center (LV-MCC), mit entsprechenden Motorsteuergeräten, deren Hauptaufgabe es ist, Motoren in industriellen Prozessen zu steuern und zu schützen, in industriellen Anwendungen einer weiten Verbreitung beziehungsweise Verwendung, wobei aufgrund der vielfältigen Einsatzmöglichkeiten eine möglichst hohe Kompatibilität und Flexibilität bei gleichzeitig einfacher Handhabbarkeit gefordert und erwünscht sind.

Aus der US 20060015844 A1 ist ein Verfahren zur automatisierten Erzeugung von Hardware und Firmware, vorzugsweise für die Entwicklung von kundenspezifischen multifunktionalen Steuerungen bekannt geworden mit welchem insbesondere das Schaltbild und die Firmware zusammen erzeugt werden können.

Des Weiteren ist der US 5909368 A ein Prozesskontrollsystem angegeben, bei welchem ein Prozesscontroller implementiert eine vom Benutzer entwickelte allgemeine Steuerungsstrategie in einem Prozesssteuerungsnetzwerk implementiert, das verteilte Controller und Feldgeräte wie Feldbus- und Nicht-Feldbus-Geräte umfasst.

Bei herkömmlichen Geräten hat der Benutzer dabei in aller Regel lediglich die Möglichkeit den Funktionsumfang der jeweiligen Steuer-/Regeleinrichtung durch einmalige manuelle Auswahl einzelner Funktionen mittels Konfiguration bei der Installation - innerhalb durch die jeweilige Firmware festgelegter Grenzen - zu verändern und/oder anzupassen. Nachteilig behält die Einrichtung dabei jedoch den starren, vorbestimmten Funktionsumfang, der durch die Firmware festgelegt ist, bei. Eine flexible und bedarfsgerechte, individuell auf die jeweiligen Anforderungen und/oder Einsatzbereiche zugeschnittene Anpassung oder gar mögliche Aktualisierungen und/oder Erweiterungen der Funktionalität der entsprechenden Steuer/Regeleinrichtung, insbesondere des Motorkontrollers, ist auf diese Weise jedoch nicht mehr möglich.

Der Erfindung stellt sich somit die Aufgabe eine flexible und bedarfsgemäße Funktionalisierung von Steuer- und Regeleinrichtungen, insbesondere von Motorsteuergeräten, zu ermöglichen.

Diese Aufgabe wird durch ein System zur Funktionalisierung von Steuer- und/oder Regeleinrichtungen, insbesondere von Motorsteuergeräten, mit den Merkmalen des Anspruchs 1 gelöst. Vorteilhafte Weiterbildungen und Ausgestaltungen des erfindungsgemäßen Systems sowie ein entsprechendes Verfahren sind in weiteren Ansprüchen und der nachfolgenden Beschreibung angegeben.

Das erfindungsgemäße System zur bedarfsgerechten Funktionaiisierung von Steuer/Regeleinrichtungen, insbesondere eines Motorsteuergeräts, umfasst wenigstens ein Zugriffsmittel für den Zugriff auf wenigstens einen ersten Datenspeicher, sowie wenigstens eine Steuer-/Regeleinrichtung, wobei der wenigstens eine erste Datenspeicher wenigstens ein Funktionsmodul aufweist, durch welches eine oder mehrere Funktionen der jeweiligen Steuer-/Regeleinrichtung ausführbar sind, und wobei im Zusammenwirken von Zugriffsmittel und dem wenigstens einen ersten Datenspeicher selektiv wenigstens ein Funktionsmodul in wenigstens eine Steuer/Regeleinrichtung übertragbar und/oder zur Ausführung speicherbar ist und die Gesamtfunktionalität der jeweiligen Steuer-/Regeleinrichtung durch bedarfsgemäße Selektion eines oder mehrerer Funktionsmodule variabel beziehungsweise flexibel anpassbar ist.

Das Zugriffsmittel kann dabei in vorteilhafter Weiterbildung als Datenverarbeitungseinrichtung, insbesondere als Mikroprozessor oder Mikrokontroller, ausgestaltet sein sowie vorteilhaft eine Eingabe- und Anzeigeeinrichtung umfassen, um die verschiedenen Funktionsmodule beziehungsweise Funktionen zu selektieren.

Vorteilhaft kann das Zugriffsmittel, welches insbesondere als Mikroprozessor oder Mikrokontroller ausgestaltetet ist, demgemäß auch in der Steuer-/Regeleinrichtung integriert sein.

In Weiterbildung des Systems umfasst die Steuer-/Regeleinrichtung einen Datenspeicher, der insbesondere als persistenter (nichtflüchtiger) Festspeicher oder Festkörper-Speicher ausgebildet und/oder in die Steuer-/Regeleinrichtung integrierbar ist. Dabei kann der Speicher insbesondere als Flash-Speicher, beispielsweise als NAND-Flash oder NCR-Flash ausgestaltet sein.

Vorteilhaft kann der Datenspeicher der Steuer-/Regeleinrichtung auch in das als Mikroprozessor oder Mikrokontroller ausgestaltete integrierte Zugriffsmittel der Steuer/Regeleinrichtung implementiert sein, beispielsweise als "embedded flash". Vorteilhaft sind entsprechende Hardware- und/oder Software-Schnittstellen zum Datenaustausch und zur Kommunikation zwischen erstem Datenspeicher und Zugriffsmittel sowie Steuer-/Regeleinrichtung vorsehbar, wie beispielsweise PCI-Bus, SCSI, USB, Firewire, RS-232. Vorteilhaft kann der Datenaustausch auch über entsprechende Leit- und/oder Feldbussysteme, wie beispielsweise RS-485, CAN, CANopen, DeviceNet, EIB, Fieldbus Foundation, Interbus, LCN (Local Control Network), Modbus, Profibus, SERCOS Interface, TTP, sowie auch Ethernet oder Realtime-Ethernet, wie beispielsweise EtherCAT, Ethernet-Powerlink, Profinet, Ethernet/IP oder auch Industrial Ethernet sowie gegebenenfalls Kombinationen daraus erfolgen, wobei demgemäße Schnittstellen vorsehbar sind.

In einer weiteren Ausgestaltung des Systems erstellt das Zugriffsmittel anhand selektierter Funktionsmodule ein Funktionsarchiv, in welchem die selektierten Funktionsmodule zur Übertragung bereitgestellt sind. Die Module können dabei, insbesondere um Speicherplatz zu sparen und/oder Übertragungszeiten zu verringern beziehungsweise eine spätere Datenübertragung zu beschleunigen, in gepackter und/oder komprimierter Form im Funktionsarchiv abgelegt sein.

Weiterhin ist das Funktionsarchiv auf dem ersten Datenspeicher abrufbar speicherbar, wobei das Archiv vorteilhaft in aufeinanderfolgenden Blöcken strukturiert ist. Jeder Block, bis auf den ersten und den letzten Archivblock, entspricht dabei im wesentlichen einem Funktionsmodul. Sind mehrere Funktionsmodule, beziehungsweise die durch sie realisierten Funktionen, eng miteinander verknüpft, gekoppelt oder bestehen Abhängigkeiten, wie sie beispielsweise bei der Realisierung von Funktionalitäten der Steuer-/Regeleinrichtung auftreten können, so sind auch ein oder mehrere Archivblöcke mit mehreren Funktionsmodulen vorteilhaft vorsehbar.

Die verschiedenen Funktionsmodule können dabei beispielsweise die Messung und/oder Erfassung von Strömen und/oder Spannungen, die Erstellung eines thermischen Abbildes eines Betriebsmittels, insbesondere eines Motors, die Erfassung von Stromspitzen und/oder Spannungsspitzen, die Erfassung und/oder Überwachung zumindest einer Drehzahl und/oder des Leerlaufs, sowie das Auslesen und/oder Überwachen verschiedenster Sensoren, beispielsweise betreffend Füllstände, Feuchtigkeiten und/oder Temperaturen vorteilhaft vorsehen.

Die Reihenfolge der Blöcke beziehungsweise der Funktionsmodule innerhalb des Archivs, ausgenommen der erste und letzte Block, sind dabei beliebig anordenbar.

Jeder Archivblock weist dabei einen Header sowie den eigentlichen Inhalt des jeweiligen Funktionsmoduls auf. Der Header beinhaltet alle für das Entpacken des Archivs relevanten Informationen, wie beispielsweise Name, Typ, Gesamtlänge, Größe, Version, Datenrate, Ursprung, Adressat, sowie die für eine Datensicherung benutzten CRC-Felder für Header und Daten.

CRC steht als Abkürzung für eine zyklische Redundanzprüfung, engl. cyclic redundancy check, bei welcher es sich um ein Verfahren beziehungsweise eine Klasse von Verfahren aus der Informationstechnik zur Bestimmung eines Prüfwerts für Daten, z. B. bei der Datenübertragung in Rechnernetzen oder bei einer Datei, oder beim Entpacken von Dateien handelt, um Fehler bei der Übertragung, Duplizierung und/oder Fehler beim Komprimieren/Dekomprimieren von Daten erkennen zu können.

Dementsprechend wird vor Beginn der Übertragung eines Datenblocks sowie im Anschluss daran jeweils ein CRC-Wert berechnet und die beiden Prüfwerte miteinander verglichen. Das CRC Verfahren ist dabei so ausgelegt, dass Fehler bei der Übertragung der Daten, wie sie beispielsweise durch Rauschen auf der Leitung, Dämpfung oder andere Übertragungsfehler, verursacht werden können größtenteils entdeckt werden. Ist darüber hinaus auch die Integrität der Daten zu gewährleisten, so sind vorteilhaft auch weiterführende Sicherungsverfahren, beispielsweise mittels kryptographischer Hash-Funktionen, anwendbar.

In vorteilhafter Ausprägung des Systems markiert der erste Archivblock den Beginn des Archivs und/oder umfasst eine Kennzeichnung zur Identifikation und/oder Zuordnung des jeweiligen Archivs. Der letzte Block dient lediglich zur Kennzeichnung des Archivendes.

In Weiterbildung des Systems umfasst die Steuer-/Regleinrichtung eine, vorzugsweise in dem zweiten Datenspeicher abgelegte Basiskomponente, welche das Übertragen und/oder Laden und/oder Speichern und/oder Ausführen und /oder Verwalten und/oder Entpacken von wenigstens einem Funktionsmodul und/oder einem Funktionsarchiv in der Steuer-/Regeleinrichtung ermöglicht.

Vorteilhaft ist ein Konfigurationswerkzeug vorsehbar, welches in das Zugriffsmittel integriert sein kann und über entsprechende Schnittstellen, die zum Betrieb der Steuer/Regeleinrichtung erforderliche und deren Funktionalität bestimmende Firmware als Archiv von Funktionsmodulen auf diese überträgt und lädt, wobei die jeweilige Steuer/Regeleinrichtung, insbesondere unter Verwendung ihrer Basiskomponente, die einzelnen Funktionsmodule beim jeweiligen Übertragungs-/Ladevorgang entpackt und installiert und damit die entsprechenden Funktionen im Motorkontroller implementiert.

Weiterhin ermöglicht das Konfigurationswerkzeug vorteilhaft ein Festlegen und/oder Laden der entsprechenden Konfigurationsparameter in die Steuer-/Regeleinrichtung. Jedes im Archiv enthaltene Funktionsmodul entspricht dabei wenigstens einer vorbestimmten Funktion des Motorkontrollers beziehungsweise des Motorsteuergerätes.

Bedarfsabhängig sind bei der Konfiguration der Steuer-/Regeleinrichtung aus beispielsweise einer Datenbank des Datenspeichers die jeweilig erforderlichen Funktionen und/oder Funktionalitäten, inklusive der zugehörigen Funktionsmodule, mit Hilfe des Zugriffsmittels selektierbar und in archivierter Form in der Datenbank abrufbar ablegbar.

In vorteilhafter Weiterbildung des Systems ist wenigstens ein Beschreiber vorsehbar, welcher parallel zur Erstellung der Firmware und/oder des Funktionsarchivs eine entsprechende funktionale und/oder technische Beschreibung der Firmware, insbesondere der Eigenschaften der einzelnen Blöcke des Funktionsarchivs erstellt. Diese Beschreibung ist vorzugsweise als Datei, insbesondere im XML Format, abrufbar abgelegt in einem Datenspeicher, insbesondere in einer Datenbank.

Die Firmware und damit die Gesamtfunktionalität der Steuer/Regeleinrichtung ergibt sich dabei als Summe der selektierten Einzelfunktionen und/oder Funktionalitäten sowie der Module.

In vorteilhafter Ausgestaltung des Systems ist ein Kennzeichner vorsehbar, der bei der Erstellung des Firmwarearchivs und/oder der Beschreibungen einen Universally Unique Identifier (UUID) vergibt, so dass Archiv und Beschreibung gekennzeichnet und eindeutig einander zuordenbar sind. Der UUID ist dabei vorzugsweise im ersten Block des Funktionsarchivs geführt.

In besonderer Ausgestaltung ist wenigstens eine Komponente des Systems in Einschubtechnik realisiert und für den Einbau in einen Schaltschrank und/oder eine Schaltanlage und/oder ein Schaltfeld vorgesehen, das heißt, Zugriffsmittel, Steuer-/Regeleinrichtung, insbesondere das Motorsteuergerät, sowie der erste Datenspeicher können in Einschubtechnik für den Einbau in einem Schaltschrank realisiert sein. Der Schaltschank ist wiederum als Teil eines Schaltfeldes vorsehbar. Weiterhin ist vorteilhaft vorsehbar, dass die erstellte Firmware beziehungsweise das erstellte Funktionsarchiv einmal konfiguriert und über ein entsprechendes Netzwerk, insbesondere ein verteiltes Netzwerk, oder eine entsprechende Anbindung parallel auf mehrere Steuer-/Regeleinrichtungen geladen wird. Vorzugsweise handelt es sich dabei um Steuer-/Regeleinrichtungen gleichen oder vergleichbaren Typs oder Art mit entsprechend vergleichbaren Aufgaben.

Weiterhin wird die gestellte Aufgabe auch durch ein entsprechendes Verfahren gelöst, welches insbesondere zur Ausführung auf einem erfindungsgemäß beispielhaft ausgebildeten System vorgesehen ist.

Beim erfindungsgemäßen Verfahren zur bedarfsgerechten Funktionalisierung von Steuer-/Regeleinrichtungen ist vorgesehen, dass schrittweise
- anhand einer vorbereitend bedarfsgemäß durchgeführten Funktionsauswahl
- ein oder mehrere auf einem ersten Datenspeicher, insbesondere einer Datenbank, abgelegte Funktionsmodule selektiert werden,
- basierend auf den selektierten Funktionsmodulen wenigstens ein Funktionsarchiv erstellt wird und
- das erstellte Archiv in wenigstens eine Steuer-/Regeleinrichtung, insbesondere einen Datenspeicher der jeweiligen Steuer-/Regeleinrichtung geladen wird, wodurch die zugehörigen Funktionsmodule und zu Grunde gelegten Funktionen in der jeweiligen Steuer-/Regeleinrichtung implementiert werden und eine flexible Anpassung der Gesamtfunktionalität der jeweiligen Steuer-/Regeleinrichtung durch bedarfgemäße Selektion der jeweiligen Funktionsmodule durchgeführt wird.

Die vorbereitende Durchführung der Funktionsauswahl und/oder Selektion der Funktionsmodule kann dabei in vorteilhafter Weiterbildung des Verfahrens unter Verwendung eines insbesondere als Mikroprozessor und/oder Datenverarbeitungseinrichtung, vorzugsweise mit Eingabe- und Anzeigeeinrichtung, ausgebildeten Zugriffsmittels erfolgen.

In Weiterentwicklung des Verfahrens werden die selektierten Funktionsmodule im Funktionsarchiv in gepackter und/oder komprimierter Form zur Übertragung bereit gestellt und/oder das Funktionsarchiv auf dem ersten Datenspeicher abrufbar gespeichert.

Um die Modularität und/oder Anpassbarkeit des Archivs zu gewährleisten wird dieses vorteilhaft in aufeinanderfolgenden Blöcken angelegt, wobei die Reihenfolge der Blöcke und damit der Funktionsmodule innerhalb des Archivs unerheblich ist. Lediglich der erste sowie der letzte Block sind hinsichtlich Art und Inhalt hinreichend genau festgelegt.

In vorteilhafter Weiterbildung wird das erstellte Funktionsarchiv in einen Datenspeicher der Steuer-/Regeleinrichtung, insbesondere einen als nichtflüchtigen Festspeicher ausgebildeten Datenspeicher, geladen. Der Ladevorgang umfasst dabei das Übertragen und Entpacken des Archivs sowie die Installation der Funktionsmodule und demgemäße Implementierung der entsprechenden Funktionen.

In Weiterbildung des Verfahrens erfolgt das Laden und Konfigurieren des Funktionsarchivs und demgemäß der Firmware in die Steuer-/Regeleinrichtung mittels eines Konfigurationswerkzeugs, welches vorteilhaft in das Zugriffsmittel integriert werden kann.

Demgemäß wird die zum Betrieb der Steuer-/Regeleinrichtung erforderliche und deren Funktionalität bestimmende Firmware als Archiv von Funktionsmodulen auf den beispielsweise Motorkontroller beziehungsweise das Motorsteuergerät geladen.

Vorteilhaft ist eine Basiskomponente der Steuer-/Regeleinrichtung vorgesehen, welche das Laden, Entpacken und/oder Installieren der entsprechenden Funktionsmodule und Implementieren der zuvor selektierten Funktionen in das jeweilige Motorsteuergerät ermöglicht.

Jedes im Archiv enthaltene Funktionsmodul implementiert dabei wenigstens eine selektierte Funktion des Motorkontrollers.

Bedarfsabhängig werden bei der Konfiguration der Steuer-/Regeleinrichtung verfahrensvorbereitend aus beispielsweise einer Datenbank des Datenspeichers mittels entsprechender Schnittstelle die jeweilig erforderlichen Funktionen und/oder Funktionalitäten ausgewählt und darauf basierend, unter Verwendung des Zugriffsmittels, automatisiert die zugehörigen Funktionsmodule selektiert und in archivierter Form in der Datenbank abrufbar abgelegt.

Unter dem Begriff Schnittstelle werden dabei jedwede Mittel zum Daten beziehungsweise Informationsaustausch verstanden, wobei sowohl Software- als auch Hardwareschnittstellen umfasst werden. Hierzu zählen beispielsweise Eingabemittel, insbesondere Tastatur, Touchscreen und entsprechende Programme und Programmcodemittel, sowie Ausgabemittel, insbesondere Monitor, Drucker, Fax, eMail sowie entsprechende Programme und Programmcodemittel.

Anhand der archivierten Funktionsmodule wird somit eine individuelle, bedarfsgemäße Firmware speziell für die jeweilige Steuer-/Regeleinrichtung, insbesondere den jeweiligen Motorkontroller, erstellt.

In vorteilhafter Weiterbildung des Verfahrens wird parallel zur Firmware auch eine entsprechende funktionale und/oder technische Beschreibung der Firmware, insbesondere für die jeweiligen Konfigurations- und Steuersysteme, erstellt.

Die Firmware und damit die Gesamtfunktionalität der Steuer/Regeleinrichtung wird dabei als Summe der selektierten Einzelfunktionen und/oder Funktionalitäten ausgebildet.

In vorteilhafter Ausgestaltung des Verfahrens wird eine Kennzeichnung vorgesehen, die bei der Erstellung des Firmwarearchivs und/oder der Beschreibung, vorzugsweise als Universally Unique Identifier (UUID) vergeben wird, so dass Archiv und Beschreibung gekennzeichnet und eindeutig einander zugeordnet werden.

Die weitere Darlegung der Erfindung sowie vorteilhafter Weiterbildungen und Ausgestaltungen erfolgt anhand von einigen Figuren und Ausführungsbeispielen, welche nachfolgend angegeben sind.

Es zeigen
Fig. 1 beispielhaft ausgebildetes System zur bedarfsgemäßen Funktionalisierung von Steuer-/Regeleinrichtungen
Fig. 2 beispielhaft aufgebautes Funktionsarchiv mit Blockstruktur
Fig. 3 erfindungsgemäß beispielhaft ausgestaltetes Engineering-System
Fig. 4 beispielhaft ausgebildeter Ablauf des Verfahrens zur bedarfsgemäßen Funktionalisierung von Steuer-/Regeleinrichtungen

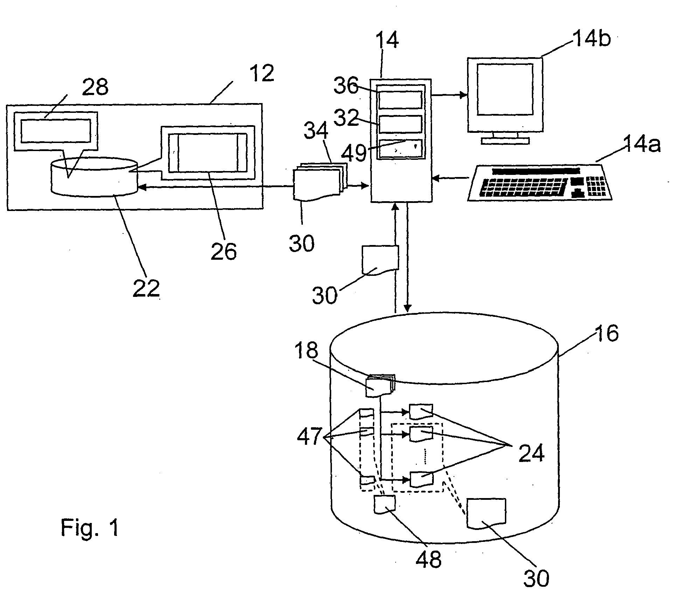

In Fig. 1 ist ein beispielhaft ausgebildetes System zur bedarfsgemäßen Funktionalisierung von Steuer- /Regeleinrichtungen, hier eines Motorsteuergerätes 12 gezeigt, welches ein als Datenverarbeitungseinrichtung, inklusive Anzeige 14a und Ausgabeeinrichtung 14b, ausgebildete Zugriffsmittel 14 zum Zugriff auf einen Datenspeicher 16 mit Datenbank 18, sowie eine als Motorsteuergerät ausgebildete Steuer-/Regeleinrichtung 12 mit einem Festspeicher 22 umfasst. Die Datenbank 18 weist eine Sammlung mehrerer Funktionsmodule 24 auf, von denen jedes jeweils eine vorbestimmte Funktion der Steuer-/Regeleinrichtung 12 beinhaltet und diese Funktion nach Installation in der Steuer-/Regeleinrichtung 12 implementiert. Vorteilhaft kann ein Funktionsmodul 24 auch mehrere Funktionen und/oder eine Funktionalität beinhalten und/oder implementieren.

Die Funktionalität ist dabei von einer Einzelfunktion zu unterscheiden, so kann beispielsweise die Funktionalität "Temperaturerfassung" mehrere Funktionen beinhalten, wie insbesondere Auslesen der Messwerte eines Temperatursensors, orts- und/oder zeitaufgelöste Kennzeichnung der Sensordaten, Speicherung der Sensordaten in einer Datenbank und Ausgabe der Sensordaten auf einem Drucker und/oder Monitor.

Auch eine Implementierung von Funktionen und/oder Funktionalitäten wie insbesondere eine oder mehrere Strommessungen, die Erstellung eines Thermischen Abbildes, beispielsweise eines Motors, das Auslesen und/oder Überwachen eines oder mehrerer Kontakttemperatursensoren, die Erfassung von Überströmen und/oder Stromspitzen, entsprechendes gilt auch für Spannungen, die Erfassung und/oder Überwachung zumindest einer Drehzahl und/oder eines Leerlaufs ist dabei vorteilhaft vorsehbar.

Der Festspeicher 22 der als Motorsteuergerät ausgebildeten Steuer-/Regeleinrichtung 12 umfasst vorteilhaft eine ausführbare Basiskomponente 26 auf, welche im Zusammenwirken mit Datenverarbeitungseinrichtung 14 und Datenspeicher 16 eine selektive Übertragung, Speicherung und Installation eines oder mehrerer Funktionsmodule 24 in den Festspeicher 22 des Motorsteuergerätes 12 ermöglicht.

Die zum Betrieb der jeweiligen Einrichtung erforderliche und deren Funktionalität bestimmende Firmware 28 ist demgemäß modular aufgebaut und wird unter Verwendung der Datenverarbeitungseinrichtung 14, nach Selektion der zu implementierenden Funktionen und/oder Funktionsmodule 24 als Archiv 30 von Funktionsmodulen 24 in beziehungsweise auf dem Datenspeicher 16 abgelegt.

Das als Datenverarbeitungseinrichtung 14 ausgestaltete Zugriffsmittel lädt das Funktionsarchiv 30 mittels eines Konfigurationswerkzeuges 32, im Zusammenwirken mit der Basiskomponente 26, in den Festspeicher 22 des Motorsteuergerätes 12.

Das Motorsteuergerät 12, insbesondere dessen Basiskomponente 26 entpackt und/oder installiert nach Übertragung des Archivs 30 die enthaltenen Funktionsmodule im Festspeicher 22 des Motorkontrollgeräts 12 und implementiert damit die zu Grunde liegenden Funktionen sowie Funktionalitäten.

Jedes im Archiv enthaltene Funktionsmodul 24 entspricht dabei wenigstens einer vorbestimmten Funktion und/oder Funktionalität des Motorsteuergerätes 12.

Die Firmware und damit die Gesamtfunktionalität des Motorsteuergerätes 12 gestaltet sich dabei als Summe der Einzelfunktionen und/oder Funktionalitäten der selektierten Funktionsmodule 24.

Vorteilhaft umfasst die Datenverarbeitungseinrichtung 14 ein Konfigurationswerkzeug 32, welches über entsprechende Schnittstellen die zum Betrieb des Motorsteuergerätes 12 erforderliche und deren Funktionalität bestimmende Firmware 28 als Archiv 30 von Funktionsmodulen auf dieses lädt und vorteilhaft ein Festlegen und/oder Laden entsprechender Konfigurationsparameter 34 in das Motorsteuergerät 12 ermöglicht. Das Konfigurationswerkzeug 32 ist dabei vorteilhaft als Programmkomponente realisiert und in das als Datenverarbeitungseinrichtung ausgebildete Zugriffsmittel 14 integriert.

Systemgemäß ist dabei sowohl eine Neukonfiguration der Firmware 28 eines Motorsteuergerätes 12 sowie eine Anpassung und/oder Erweiterung einer bereits existierenden Firmware 28 ermöglicht, indem individuell und bedarfsgemäß auch einzelne Funktionen sowie Funktionsmodule 24 selektiert und/oder implementiert werden können.

Weiterhin ist wenigstens ein Prüfmittel 36 vorsehbar, welches die selektierten Funktionsmodule 24 und/oder ihre Funktionen auf Abhängigkeiten und/oder Verknüpfungen hin überprüft und anhand gegebenenfalls ermittelter Abhängigkeiten und/oder Verknüpfungen einen Plausibilitätscheck hinsichtlich der Vollständigkeit der selektierten Funktionsmodule 24 durchführt.

Wird bei der Überprüfung festgestellt, dass trotz bestehender Abhängigkeiten und/oder Verknüpfungen eigentlich erforderliche Funktionsmodule 24 nicht selektiert sind, so generiert das Prüfmittel 36 ein entsprechendes Signal, beispielsweise ein optisches und/oder akustisches Signal, insbesondere eine entsprechende Warnmeldung und/oder gibt an, welche Funktionsmodule 24 noch zu selektieren sind.

Weiterhin ist vorsehbar, dass das Prüfmittel 36 noch fehlende, aufgrund bestehender Abhängigkeiten und/oder Verknüpfungen jedoch erforderliche Funktionsmodule 24 automatisch selektiert und damit ergänzt.

Auch kann für jeden Eintrag in der Datenbank 18 des Datenspeichers 16 beziehungsweise jedes Funktionsmodul 24 eine Beschreibungsdatei 47 vorgesehen und diesem zugeordnet sein, welche vorzugsweise im XML-Format hinterlegt ist. Anhand der hinterlegten Modulbeschreibungen 47 ist dann mittels eines vorsehbaren Beschreibers 49 eine Beschreibung 48 des Funktionsarchivs 30 sowie der entsprechenden Firmware 28 erstell- und/oder auf den Datenspeicher 16 hinterlegbar und kann erfindungsgemäß gemeinsam mit der Firmware 28 auf eine oder mehrere Steuer/Regeleinrichtungen übertragen werden.

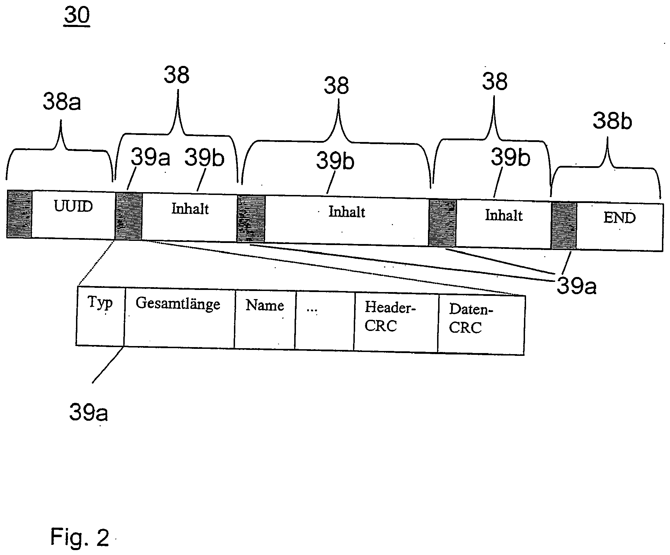

Um die Modularität und/oder Anpassbarkeit des Archivs zu gewährleisten wird dieses, wie in Fig. 2 gezeigt, vorteilhaft in aufeinanderfolgenden Blöcken 38 angelegt, wobei die Reihenfolge der Blöcke 38 und damit der Funktionsmodule 24 innerhalb des Archivs 30 unerheblich ist. Lediglich der erste 38a sowie der letzte Block 38b sind hinsichtlich Art und Inhalt hinreichend genau festgelegt.

Jeder Archivblock 38 weist dabei einen Header 39a sowie den eigentlichen Inhalt 39b des jeweiligen Funktionsmoduls 24 auf. Der Header 39a beinhaltet alle für das Entpacken des Archivs 30 relevanten Informationen, wie beispielsweise Typ, Gesamtlänge, Größe, Version, Datenrate, Ursprung, Adressat, sowie die für eine Datensicherung benutzten CRC-Felder für Header 39a und Daten 39b.

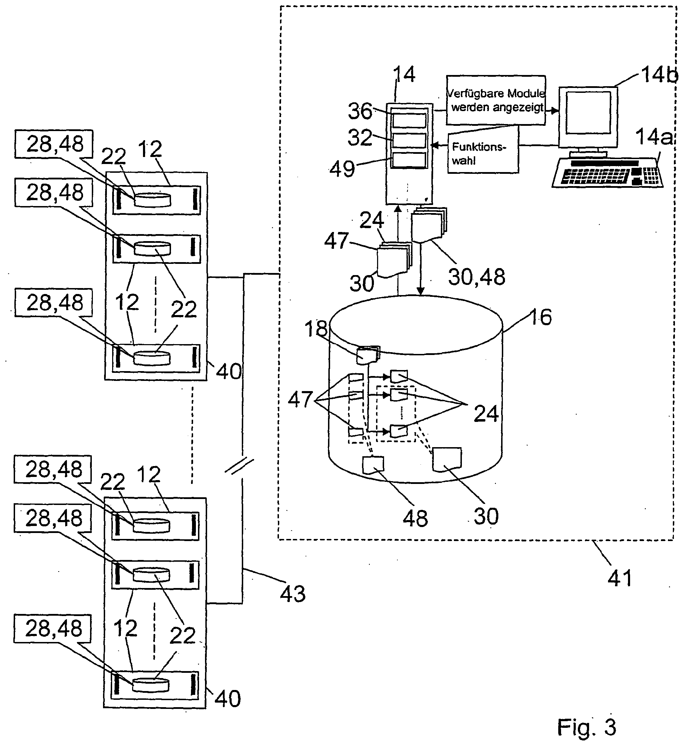

Vorteilhaft ist vorgenanntes System, wie in Fig. 3 gezeigt, in ein Engineering-System 41 für eine Schaltanlage 40 integrierbar, so dass außer der Konfiguration der jeweiligen Schaltanlage 40 systemgemäß auch eine Erstellung der entsprechenden Motorkontroller-Firmware möglich und durchführbar ist. Dabei können insbesondere auch mehrere verschiedene Firmware-Komponenten beziehungsweise -Varianten erstellt und/oder einem oder mehreren Motorkontrollgeräten 12 zugewiesen werden. Die Zuweisung und/oder das Laden der jeweiligen Firmware 28 erfolgt dabei über entsprechende Schnittstellen und Lokal Area Network (LAN) 43 oder World Area Network (WAN) oder ein entsprechendes Bus- und/oder Leitsystem.

Das Engineering-System ist dabei insbesondere variabel gestaltbar hinsichtlich der Kontrollkommandos, Dateistruktur und/oder Layout.

Mittels einer Anzeige-/Eingabeeinrichtung 14a, b erfolgt der Zugriff auf Daten und/oder Regelkomponenten, sowie deren Anzeige. Darüber hinaus erfolgt mit ihrer Hilfe auch die, in aller Regel manuelle Auswahl der gewünschten Funktionen der wenigstens einen
Steuer-/Regeleinrichtung 12, insbesondere des Motorsteuergerätes.

Nach Auswahl der Funktionen werden über das Zugriffsmittel 14 die entsprechenden Funktionsmodule 24 aus der Datenbank 18 des Datenspeichers 16 des Engineering-Systems 41 selektiert, daraus ein Funktionsarchiv 30 erstellt und in beziehungsweise auf dem Datenspeicher 16 gespeichert.

Für jeden Eintrag in der Datenbank 18 des Engineering Systems ist dabei auch eine Beschreibungsdatei 47 vorsehbar, die die Eigenschaften des jeweiligen Archivblocks 38 beschreibt. Für diese Beschreibungsdatei 47 wird vorzugsweise das XML-Format verwendet (allgemein bekanntes Datenbeschreibungsformat ähnlich HTML).

Demgemäß wird parallel anhand der auf dem Datenspeicher 16 hinterlegten Modulbeschreibungen 47 mittels eines Beschreibers 49 eine Beschreibung 48 des Funktionsarchivs 30 sowie der entsprechenden Firmware 28 erstellt. Mittels des Konfigurationswerkzeuges 32 des Zugriffsmittels 14 sowie der Anzeige/Eingabeeinrichtiung 14a,b -auch HMI "human machine Interface" genannt- wird das Funktionsarchiv 30 respektive die entsprechende Firmware 28 konfiguriert und die resultierenden Konfigurationsparameter gemeinsam mit dem Archiv 30 und/oder der erstellten Archivbeschreibung 48 über eine entsprechende Datenleitung 43 auf einen oder mehrere Motorsteuergeräte 12 einer oder mehrerer Schaltanlagen 40 geladen.

In vorteilhafter Weiterbildung ist die erstellte Archivdatei 48 auch als Datei auf einem Datenspeicher, insbesondere dem Datenspeicher 16 des Engineering-Systems 41, hinterlegbar und ist damit über eine entsprechende Netzwerkanbindung auch anderen Systemen, Servern und/oder Steuer-/Regeleinrichtungen zur Verfügung gestellt.

Die Laufzeitumgebung des jeweiligen Motorkontrollers beziehungsweise Motorsteuergerätes 12 ist auf das jeweilige Betriebssystem, den Echtzeit-Scheduler und den Kommunikationsstack, beispielsweise TCP/IP Netzwerktreiber oder RTNET (Realtime-Netzwerktreiber) begrenzt. Der gesamte Rest einschließlich der Installations- und/oder Startprozeduren ist Teil der herunterzuladenden Firmware 28 beziehungsweise des Funktionsarchivs 30. Damit kann das jeweilige System sehr flexibel and sich ändernde/neue Anforderungen angepasst werden.

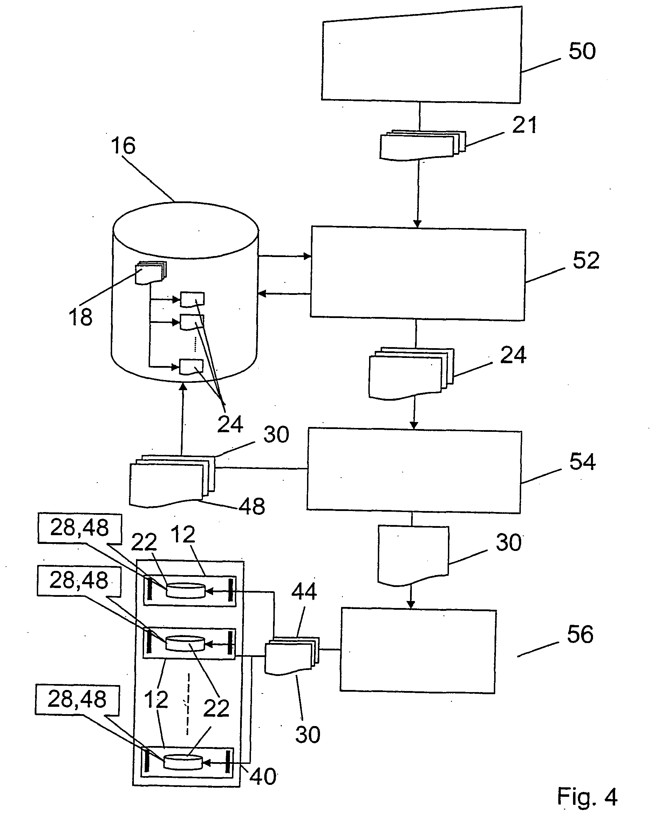

In Fig. 4 ist ein beispielhaft ausgebildeter Ablauf des erfindungsgemäßen Verfahrens zur Funktionalisierung von Steuer-/Regeleinrichtungen gezeigt, welches vorteilhaft auf einem der vorbeschriebenen Systeme ausführbar ist.

Dabei werden zur bedarfsgerechten Funktionalisierung eines Motorsteuergerätes 12 anhand einer verfahrensvorbereitend durchgeführten bedarfsgemäßen Funktionsauswahl ein oder mehrere auf einem Datenspeicher 16 in einer Datenbank 18 abgelegte Funktionsmodule selektiv in das Motorsteuergerät 12 geladen. Dazu wird in einem ersten Schritt 50 eine vorbereitende bedarfsgemäße Funktionsauswahl aus mehreren angebotenen Funktionen durchgeführt.

In einem zweiten Schritt 52 werden anhand der ausgewählten Funktionen 21 automatisiert ein oder mehrere auf einem ersten Datenspeicher 16 in einer Datenbank 18 abgelegte, den jeweiligen Funktionen zugehörige Funktionsmodule 24 selektiert. Basierend auf den selektierten Funktionsmodulen 24 wird in einem dritten Schritt 54 wenigstens ein Funktionsarchiv 30 erstellt und in einem vierten Schritt 56 das erstellte Archiv 30 in das jeweilige Motorsteuergerät 12, insbesondere den Datenspeicher 22 des jeweiligen Motorsteuergerätes 12 geladen. Bei diesem Vorgang werden die zugehörigen Funktionsmodule 24 und zu Grunde gelegten Funktionen in das jeweilige Motorsteuergerät 12 implementiert.

Vorteilhaft kann das erstellte Archiv 30 beim Ladevorgang nicht lediglich auf eine Steuer-/Regeleinrichtung 12 sondern nahezu gleichzeitig auch auf mehrere derartige Einrichtungen 12, auf die beispielsweise über entsprechende Schnittstellen und/oder ein entsprechendes Netzwerk und/oder Bussystem zugegriffen werden kann, und die insbesondere in einer Schaltanlage 40 und/oder einem verteilten System angeordnet sind, übertragen und/oder die entsprechenden Funktionsmodule 24 sowie Funktionen dann installiert und implementiert werden.

Auf diese Weise wird eine flexible Anpassung der Gesamtfunktionalität des Motorsteuergerätes 12 durch bedarfgemäße Selektion der jeweiligen Funktionsmodule 24 durchgeführt.

Die vorbereitende Durchführung der Funktionsauswahl und/oder Selektion der Funktionsmodule 24 kann dabei in vorteilhafter Weiterbildung des Verfahrens unter Verwendung eines insbesondere als Mikroprozessor und/oder Datenverarbeitungseinrichtung, vorzugsweise mit Eingabe- und Anzeigeeinrichtung, ausgebildeten Zugriffsmittels 14 erfolgen, wobei die eigentliche Auswahl manuell über ein entsprechendes HMI (Human Machine Interface), insbesondere eine Eingabe/Anzeigeeinrichtung, wie beispielsweise ein Touchscreen, erfolgt.

Die Funktionswahl kann dabei vorgabenabhängig automatisiert oder halbautomatisch oder manuell durch entsprechende Eingabe durchgeführt werden.

Bei der vorgabenabhängig automatisierten Variante wird der gewünschte Funktionsumfang vorab festgelegt, beispielsweise im Rahmen eines gespeicherten Datensatzes mit entsprechenden Anweisungen, der dann lediglich noch abzuarbeiten ist.

Diese Variante könnte beispielsweise beim Aktualisieren bereits implementierter Funktionsmodule 24 oder Firmware 28 Anwendung finden, da dann der Funktionsumfang bereits bestimmt ist.

Bei der halbautomatischen Variante, die beispielsweise bei einem Upgrade der Firmware 28 und/oder Funktionsmodule 24 Anwendung finden könnte, ist eine Basisfunktionalität beziehungsweise eine Firmware-Grundversion, die zu implementieren ist, bereits vorgegeben, insbesondere über einen entsprechenden abzuarbeitenden Datensatz. Dies scheint insbesondere dann angebracht wenn bestimmte Typen an Steuer-/Regeleinrichtungen 12, wie beispielsweise Motorsteuergeräte, stets eine gewisse Grundfunktionalität bedingen. Die Basisfunktionalität lässt sich dann durch ergänzende manuelle Auswahl von Funktionen über entsprechende Schnittstellen und/oder Eingabemittel nach Belieben erweitern und/oder auch ändern und/oder anpassen, beispielsweise durch Austausch oder Wechsel von Funktionen und/oder Funktionsmodulen 24.

Bei der rein manuellen Auswahl von Funktionen bestimmt der jeweilige Anwender des Verfahrens und/oder Benutzer des verfahrensausführenden Systems händisch den jeweiligen Funktionsumfang beziehungsweise die Funktionalität der jeweiligen Steuer/Regeleinrichtung 12, insbesondere des Motorsteuergerätes.

In Fortführung des Verfahrens werden dann, die den ausgewählten Funktionen zugehörigen beziehungsweise zugeordneten Funktionsmodule 24 im zweiten Schritt 52 automatisiert aus der Datenbank 18 des Datenspeichers 16 selektiert.

Die selektierten Funktionsmodule 24 im Funktionsarchiv 30 in gepackter und/oder komprimierter Form zur Übertragung bereitgestellt und/oder das Funktionsarchiv 30 im dritten Schritt 54 auf dem Datenspeicher 16 abrufbar abgelegt.

Alternativ könnte das Archiv auch auf einem anderen zur Verfügung stehenden Datenspeicher abrufbar abgelegt werden.

Weiterhin wird im vierten Schritt 56 das erstellte Funktionsarchiv 30 in einen Datenspeicher 22 des jeweiligen Motorsteuergerätes 12, insbesondere einen als nichtflüchtigen Festspeicher ausgebildeten Datenspeicher, geladen. Der Ladevorgang umfasst dabei das Übertragen und Entpacken des Archivs 30 sowie die Installation der Funktionsmodule 24 und demgemäße Implementierung der entsprechenden Funktionen.

Verfahrensgemäß kann im vierten Schritt 52 auch eine Konfiguration des Funktionsarchivs 30 und demgemäß der Firmware 28 durchgeführt und/oder die Konfigurationsparameter 44 mit dem Archiv 30 in die jeweilige Steuer/Regeleinrichtung, insbesondere das Motorsteuergerät 12, geladen werden.

Jedes im Archiv enthaltene Funktionsmodul 24 implementiert dabei wenigstens eine selektierte Funktion des Motorkontrollers 12.

Zusätzlich wird parallel zur Firmware 28 beziehungsweise dem Funktionsarchiv 30 anhand vorliegender Modulbeschreibungen 47 und/oder Blockbeschreibungen der einzelnen Archivblöcke im dritten Schritt 54 auch eine Beschreibung 48 der Firmware 28 und/oder des Funktionsarchivs 30, insbesondere für das jeweilige Konfigurationssystem und/oder eine Variablen- und/oder Kommandobeschreibung für die Bedienoberfläche und/oder das Prozesskontrollsystem, insbesondere für den oder die eingesetzten OPC Server, generiert.

Die Firmware 28 und damit die Gesamtfunktionalität der Steuer/Regeleinrichtung 12 gestaltet sich dabei als Summe der selektierten Einzelfunktionen und/oder Funktionalitäten, wobei die Firmware 28 durch bedarfgemäße Selektion eines oder mehrerer Funktionsmodule 24 flexibel anpassbar ist.

Werden die in der Datenbank 18 abrufbar abgelegten beziehungsweise gespeicherten Funktionsmodule modifiziert, beziehungsweise geändert oder erweitert, so kann die Steuer/Regeleinrichtung 12 im Rahmen im Rahmen ihrer Hardwaremöglichkeiten, auch andere und/oder weiterführende Aufgaben übernehmen, wie beispielsweise "ConditionMonitoring" und/oder Gateway für Geräte von Drittherstellern.

Verfahrensgemäß wird bei der Erstellung des Firmwarearchivs 30 und/oder der Beschreibungen 48 ein so genannter Universally Unique Identifier (UUID) vergeben, so dass Archiv 30 und Beschreibung 48 eindeutig einander zugeordnet werden können.

Der UUID ist dabei ein gebräuchlicher Standard für Identifizierer, der von der Open Software Foundation (OSF) als Teil des Distributed Computing Environment (DCE) standardisiert wurde.

Vorteilhaft erfolgt die Archivierung der selektierten Funktionsmodule 24 unter Berücksichtigung bestehender Abhängigkeiten und/oder Verknüpfungen zwischen den jeweiligen Funktionsmodulen 24.

Vorteilhaft ist dabei weiterhin vorsehbar, dass nicht ausgewählte Module deren Selektion aufgrund bestehender Abhängigkeiten jedoch erforderlich wäre automatisch selektiert und/oder ergänzt werden.

Darüber hinaus wird in vorgenanntem Fall eine entsprechende Warnmeldung und/oder Hinweismeldung generiert.

Stören sich Module und/oder schließen sich Module 24 gegenseitig oder wechselseitig aus, so kann ebenfalls eine entsprechende Warnmeldung ausgegeben werden. Die Ausgabe kann dabei optisch und/oder akustisch erfolgen.

Erfindungsgemäß ist die Firmware 28 einer Steuer-Regeleinrichtung 12 somit nicht als monolytischer Block festgeschrieben, sondern kann durch den Zusammenschluss von Einzelmodulen 24 individuell und bedarfsgemäß für den Einzelfall generiert und/oder angepasst werden. Dabei wird für jede Funktion, die in einem Modul 24 abgebildet werden soll eine entsprechende Beschreibung 48 sowie ein entsprechender Funktionsbeziehungsweise Programmcode entwickelt.

Diese Modulsammlung ist sowohl hinsichtlich Anzahl aber auch Funktion erweiter- und/oder anpassbar und/oder in eine Datenbank des beispielsweise jeweiligen Engineering-Systems einpflegbar.

Solange die implementierten Schnittstellen beziehungsweise Interfaces für die Module abwärtskompatibel sind, sind immer wieder weitere! Module erstellbar und/oder die Firmware 28 beliebig anpass- und/oder änderbar, indem bestehende Module erweitert oder revidiert werden können, ohne dass sich dadurch störende Wechselwirkungen mit den übrigen Funktionsmodulen ergeben beziehungsweise diese davon betroffen sind.

Insbesondere bei jedem Konfigurationsvorgang besteht somit die Möglichkeit, zusätzlich zu den bereits implementierten Funktionen und/oder Funktionsmodulen 24 weitere Module zu ergänzen und/oder zu ersetzen und die entsprechenden Funktionen zu implementieren beziehungsweise bereits implementierte Module zu aktualisieren und die Firmware 28 damit auf einfache Art und Weise den jeweiligen Bedürfnissen und/oder technischen Voraussetzungen, insbesondere was die Hardwareentwicklung und den Einsatzbereich der jeweiligen Steuer-/Regeleinrichtung 12 angeht, auf dem aktuellen Stand (up to date) zu halten.

In Fortbildung des Verfahrens wird bei Ausführung auf einem entsprechend ausgebildeten Engineering-System die Grundfunktionalität der Steuer-iRegeleinrichtung 12, insbesondere eines Motorkontrollers, über die Basiskomponente 26 der Steuer-/Regeleinrichtung 12 bestimmt und/oder festgelegt. Weiterhin werden über ein entsprechendes Konfigurationsprogramm alle verfügbaren Funktionen/Funktionsmodule zur Auswahl angegeben, wobei dann beispielsweise die Funktionen für den betreffenden Motorstarter auswählbar sind, und die bedarfsgemäßen Funktionen und/oder Funktionalitäten ausgewählt werden können.

Anhand der bedarfgemäß ausgewählten Funktionen und/oder Funktionalitäten werden daraufhin die Programmcodesegmente der zugehörigen Funktionsmodule 24 selektiert, zu einem Firmwarearchiv 30 zusammengefasst und/oder gepackt und zur Übertragung bereitgestellt.

In Weiterbildung der Erfindung ist die Laufzeitumgebung des Motorkontrollers 12 auf das jeweilige Betriebssystem, den Echtzeit-Scheduler und den Kommunikationsstack, beispielsweise TCP/IP_Netzwerktreiber oder RTNET (Realtime-Netzwerktreiber)) begrenzt. Der gesamte Rest einschließlich der Installations- und/oder Startprozeduren ist Teil der herunterzuladenden Firmware 28 beziehungsweise des Funktionsarchivs 30. Damit kann das zur Ausführung vorgesehene System sehr flexibel an sich ändernde/neue Anforderungen angepasst werden.

Zur Implementierung der in den Motorkontroller 12 übertragenen Funktionsmodule 24 wird zunächst ein Installationsscript und danach ein Firmware-Startup-Script geladen.

Dementsprechend werden zunächst vorhandene Echtzeit-Funktionsmodule in den Scheduler eingehängt und anschließend alle Funktionsmodule 24 geladen und initialisiert. In diesem Schritt prüft jedes Funktionsmodul 24 ob eventuell referenzierte
Funktionsmodule/Echtzeit-Funktionsmodule vorhanden sind und ob die jeweiligen Konfigurationsdaten korrekt sind.

Verläuft die Initialisierung erfolgreich werden die Funktionsmodule 24 zyklisch ausgeführt. Die Echtzeit-Funktionsmodule laufen im Hintergrund mit erhöhter Priorität um z.B. Kommunikationsvorgänge, Zeitsteuerungen in Echtzeit zu ermöglichen.

## Patentansprüche

1. System zur bedarfsgemäßen Funktionalisierung von Steuer-/Regeleinrichtungen (12), insbesondere eines Motorsteuergeräts, mit wenigstens einem Zugriffsmittel (14) für den Zugriff auf wenigstens einen ersten Datenspeicher (16), sowie wenigstens eine Steuer-/Regeleinrichtung (12), wobei der wenigstens eine erste Datenspeicher (16) wenigstens ein Funktionsmodul (24) aufweist, durch welches eine oder mehrere Funktionen der jeweiligen Steuer-/Regeleinrichtung (12) ausführbar sind, und wobei im Zusammenwirken vom Zugriffsmittel (14) und dem wenigstens einen ersten Datenspeicher (16) selektiv wenigstens ein Funktionsmodul (24) in die wenigstens eine Steuer-/Regeleinrichtung (12) ladbar ist und die Gesamtfunktionalität der jeweiligen Steuer-/Regeleinrichtung (12) durch bedarfsgemäße Selektion eines oder mehrerer Funktionsmodule (24) flexibel anpassbar ist, indem eine vorbereitende bedarfsgemäße Funktionsauswahl aus mehreren angebotenen Funktionen durchgeführt und automatisiert den jeweiligen Funktionen zugehörige Funktionsmodule selektiert werden, wobei das Zugriffsmittel (14) anhand von wenigstens einem selektierten Funktionsmodul (24) ein Funktionsarchiv (30) erstellt, in welchem das wenigstens eine selektierte Funktionsmodul (24) zur Übertragung bereitgestellt ist, und wobei das Funktionsarchiv (30) in aufeinanderfolgenden Blöcken (38) strukturiert ist und jeder Block, bis auf den ersten (38a) und den letzten Funktionsarchivblock (38b), jeweils einen Header (39a) aufweist, wobei der Header (39a) alle für das Entpacken des Funktionsarchivs relevanten Informationen, wie insbesondere Typ, Gesamtlänge, Größe, Version, Datenrate, Ursprung und/oder Adressat beinhaltet, sowie den eigentlichen Inhalts des jeweiligen Funktionsmoduls (24) und die für eine Datensicherung benutzten CRC-Felder für Header (39a) und Daten (39b) aufweist und wobei wenigstens ein Beschreiber (49) vorgesehen ist, der anhand vorliegender Beschreibungen der einzelnen Funktionsmodule eine funktionale und/oder technische Beschreibung (48) der als Funktionsarchiv von Funktionsmodulen gebildete Firmware (28) der Steuer/Regeleinrichtung, insbesondere der Eigenschaften der einzelnen Blöcke (38) des Funktionsarchivs (30), erstellt und auf einem Datenspeicher (16,22) speichert, wobei die Beschreibung (48) der als Funktionsarchiv von Funktionsmodulen gebildeten Firmware (28) gemeinsam mit der Firmware (28) auf eine oder mehrere Steuer/Regeleinrichtungen übertragen wird.

2. System nach einem der vorherigen Ansprüche, **dadurch gekennzeichnet, dass** die Steuer-/Regeleinrichtung (12) einen Datenspeicher (22) aufweist, der insbesondere als persistenter oder nichtflüchtiger Festspeicher und/oder als Festkörper-Speicher ausgebildet ist.

3. System nach einem der vorherigen Ansprüche, **dadurch gekennzeichnet, dass** wenigstens eine Hardware- und/oder Software-Schnittstelle zum Datenaustausch und zur Kommunikation zwischen dem wenigstens einen ersten Datenspeicher (16) und dem wenigstens einen Zugriffsmittel (14) sowie der wenigstens einen Steuer-/Regeleinrichtung (12) vorgesehen ist.

4. System nach einem der Ansprüche 1 bis 3, **dadurch gekennzeichnet, dass** das Funktionsarchiv (30) auf dem wenigstens einem ersten Datenspeicher (16) gespeichert ist und/oder die einzelnen Funktionsmodule (24) in gepackter und/oder komprimierter Form im Funktionsarchiv (30) abgelegt sind.

5. System nach einem der vorherigen Ansprüche, **dadurch gekennzeichnet, dass** ein Konfigurationswerkzeug (32) vorgesehen ist, welches in das Zugriffsmittel (14) integrierbar ist, und mit welchem die zum Betrieb der Steuer-/Regeleinrichtung (12) erforderliche und deren Funktionalität bestimmende Firmware (28) als Funktionsarchiv (30) von Funktionsmodulen (24) konfigurierbar und/oder auf die Steuer-/Regeleinrichtung (12) übertragbar und/oder ladbar ist.

6. System nach einem der vorherigen Ansprüche, **dadurch gekennzeichnet, dass** die Steuer-/Regeleinrichtung (12) eine Basiskomponente (26) aufweist, welche die einzelnen Funktionsmodule (24) beim jeweiligen Übertragungs-/Ladevorgang entpackt und/oder installiert und damit die entsprechenden Funktionen in der jeweiligen Steuer-Regeleinrichtung (12), insbesondere in einem Motorsteuergerät, implementiert.

7. System nach einem der vorherigen Ansprüche, **dadurch gekennzeichnet, dass** wenigstens ein Prüfmittel (36) vorgesehen ist, welches die selektierten Funktionsmodule (24) und/oder ihre Funktionen auf Abhängigkeiten und/oder Verknüpfungen hin überprüft und/oder anhand der ermittelten Abhängigkeiten und/oder Verknüpfungen einen Plausibilitätscheck hinsichtlich der Vollständigkeit der selektierten Funktionsmodule (24) durchführt.

8. System nach Anspruch 7, **dadurch gekennzeichnet, dass** das Prüfmittel (36) signalisiert und/oder angibt, wenn aufgrund bestehender Abhängigkeiten und/oder Verknüpfungen erforderliche Funktionsmodule (24) nicht selektiert sind.

9. System nach einem der Ansprüche 7 oder 8, **dadurch gekennzeichnet, dass** das Prüfmittel (36) aufgrund bestehender Abhängigkeiten und/oder Verknüpfungen erforderliche Funktionsmodule (24) automatisch selektiert.

10. Verfahren zur bedarfsgemäßen Funktionalisierung von Steuer-/Regeleinrichtungen (12) wobei schrittweise
• anhand einer vorbereitend bedarfsgemäß durchgeführten Funktionsauswahl ein oder mehrere auf wenigstens einem ersten Datenspeicher (16), insbesondere einer Datenbank (18), abgelegte Funktionsmodule (24) selektiert werden,
• basierend auf den selektierten Funktionsmodulen (24) wenigstens ein Funktionsarchiv (30) erstellt wird und
• das erstellte Funktionsarchiv (30) in wenigstens eine Steuer-/Regeleinrichtung (12), insbesondere in einen Datenspeicher (22) der jeweiligen Steuer-/Regeleinrichtung (12) geladen wird, wodurch die zugehörigen
Funktionsmodule (24) und zu Grunde gelegten Funktionen in der Steuer-/Regeleinrichtung (12) implementiert werden und eine flexible Anpassung der Gesamtfunktionalität der jeweiligen Steuer-/Regeleinrichtung (12) durch bedarfsgemäße Selektion der jeweiligen Funktionsmodule (24) durchgeführt wird, **wobei**
• die zum Betrieb der Steuer-/Regeleinrichtung (12) erforderliche und deren Funktionalität bestimmende Firmware (28) als Funktionsarchiv (30) von Funktionsmodulen (24) auf die Steuer-/Regeleinrichtung (12), insbesondere einen Motorkontroller geladen wird, und
• jedes im Funktionsarchiv (30) enthaltene Funktionsmodul (24) dabei wenigstens eine ausgewählte Funktion der Steuer-/Regeleinrichtung (12), insbesondere des Motorsteuergerätes implementiert und
• das Funktionsarchiv (30) in aufeinanderfolgenden Blöcken (38) strukturiert ist undjeder Block, bis auf den ersten (38a) und den letzten Archivblock (38b), jeweils einen Header (39a) aufweist, wobei der Header (39a) alle für das Entpacken des Funktionsarchivs relevanten Informationen, wie insbesondere Typ, Gesamtlänge, Größe, Version, Datenrate, Ursprung und/oder Adressat beinhaltet, sowie den eigentlichen Inhalts des jeweiligen Funktionsmoduls (24) und die für eine Datensicherung benutzten CRC-Felder für Header (39a) und Daten (39b) aufweist und wobei wenigstens ein Beschreiber (49) vorgesehen ist, der anhand vorliegender Beschreibungen der einzelnen Funktionsmodule eine funktionale und/oder technische Beschreibung (48) der als Funktionsarchiv von Funktionsmodulen gebildeten Firmware (28) der Steuer/Regeleinrichtung, insbesondere der Eigenschaften der einzelnen Blöcke (38) des Funktionsarchivs (30), erstellt und auf einem Datenspeicher (16,22) speichert, wobei die Beschreibung (48) der als Funktionsarchiv von Funktionsmodulen gebildeten Firmware (28) gemeinsam mit der Firmware (28) auf eine oder mehrere Steuer/Regeleinrichtungen übertragen wird.

11. Verfahren nach Anspruch 10, **dadurch gekennzeichnet, dass** der Ladevorgang das Übertragen und Entpacken des Funktionsarchivs (30) sowie die Installation der Funktionsmodule (24) und demgemäße Implementierung der entsprechenden Funktionen in der Steuer-/Regeleinrichtung (12) umfasst.

12. Verfahren nach einem der Ansprüche 10 oder 11, **dadurch gekennzeichnet, dass** das Laden und Konfigurieren des Funktionsarchivs (30) und demgemäß der Firmware (28) in die Steuer-/Regeleinrichtung mittels eines Konfigurationswerkzeugs durchgeführt wird, welches vorteilhaft in das Zugriffsmittel (14) integrierbar ist.

13. Verfahren nach einem der Ansprüche 10 bis 12, **dadurch gekennzeichnet, dass** das Laden, Entpacken und Installieren der entsprechenden Funktionsmodule (24) und Implementieren der zuvor selektierten Funktionen mittels einer Basiskomponente der Steuer-/Regeleinrichtung (12) durchgeführt wird.

14. Verfahren nach einem der Ansprüche 10 bis 13, **dadurch gekennzeichnet, dass** bei der Konfiguration der Steuer-/Regeleinrichtung (12) verfahrensvorbereitend, insbesondere aus einer Datenbank (18) des Datenspeichers (16) mittels entsprechender Schnittstelle die jeweilig erforderlichen Funktionen und/oder Funktionalitäten ausgewählt werden.

## Claims

1. System for need-oriented functionalization of open-loop/closed-loop control devices (12), in particular of an engine control unit, having at least one access means (14) for accessing at least one first data memory (16), and at least one open-loop/closed-loop control device (12), wherein the at least one first data memory (16) has at least one functional module (24) by means of which one or more functions of the respective open-loop/closed-loop control device (12) are performable, and wherein the interaction of the access means (14) and the at least one first data memory (16) results in at least one functional module (24) being selectively loadable into the at least one open-loop/closed-loop control device (12) and the overall functionality of the respective open-loop/closed-loop control device (12) is flexibly adaptable by means of need-oriented selection of one or more functional modules (24) by virtue of a preparatory need-oriented function selection from multiple provided functions being performed and functional modules associated with the respective functions being selected in an automated fashion, wherein the access means (14) uses at least one selected functional module (24) to create a function archive (30) in which the at least one selected functional module (24) is provided for transfer, and wherein the function archive (30) is structured in successive blocks (38) and each block, apart from the first (38a) and the last (38b) function archive block, has in each case one header (39a), wherein the header (39a) contains all the information relevant for unpacking the function archive, such as in particular type, total length, size, version, data rate, origin and/or addressee, and has the actual content of the respective functional module (24) and the CRC fields, used for data protection, for header (39a) and data (39b) and wherein there is provision for at least one descriptor (49) that takes available descriptions of the individual functional modules as a basis for creating a functional and/or technical description (48) of the firmware (28), formed as a function archive of functional modules, of the open-loop/closed-loop control device, in particular of the properties of the individual blocks (38) of the function archive (30), and stores said description on a data memory (16, 22), wherein the description (48) of the firmware (28) formed as a function archive of functional modules is transferred together with the firmware (28) to one or more open-loop/closed-loop control devices.

2. System according to one of the preceding claims, **characterized in that** the open-loop/closed-loop control device (12) has a data memory (22) that is, in particular, in the form of a persistent or non-volatile read-only memory and/or in the form of a solid-state memory.

3. System according to either of the preceding claims, **characterized in that** there is provision for at least one hardware and/or software interface for data interchange and for communication between the at least one first data memory (16) and the at least one access means (14) and also the at least one open-loop/closed-loop control device (12).

4. System according to one of Claims 1 to 3, **characterized in that** the function archive (30) is stored on the at least one first data memory (16) and/or the individual functional modules (24) are stored in the function archive (30) in packed and/or compressed form.

5. System according to one of the preceding claims, **characterized in that** there is provision for a configuration tool (32) that is integrable into the access means (14) and by means of which the firmware (28) required for operating the open-loop/closed-loop control device (12) and determining the functionality thereof is configurable as a function archive (30) of functional modules (24) and/or is transferrable to and/or loadable onto the open-loop/closed-loop control device (12).

6. System according to one of the preceding claims, **characterized in that** the open-loop/closed-loop control device (12) has a basic component (26) that unpacks and/or installs the individual functional modules (24) during the respective transfer/loading process and hence implements the applicable functions in the respective open-loop/closed-loop control device (12), in particular in an engine control unit.

7. System according to one of the preceding claims, **characterized in that** there is provision for at least one test means (36) that checks the selected functional modules (24) and/or their functions for dependencies and/or links and/or uses the ascertained dependencies and/or links to perform a plausibility check in respect of the completeness of the selected functional modules (24) .

8. System according to Claim 7, **characterized in that** the test means (36) signals and/or indicates when existing dependencies and/or links mean that required functional modules (24) are not selected.

9. System according to either of Claims 7 and 8, **characterized in that** the test means (36) takes existing dependencies and/or links as a basis for automatically selecting required functional modules (24) .

10. Method for need-oriented functionalization of open-loop/closed-loop control devices (12), wherein, step by step,
• a function selection performed in a preparatory fashion according to need is used to select one or more functional modules (24) stored on at least one first data memory (16), in particular a database (18),
• the selected functional modules (24) are taken as a basis for creating at least one function archive (30), and
• the created function archive (30) is loaded into at least one open-loop/closed-loop control device (12), in particular into a data memory (22) of the respective open-loop/closed-loop control device (12), as a result of which the associated functional modules (24) and underlying functions are implemented in the open-loop/closed-loop control device (12) and flexible adaptation of the overall functionality of the respective open-loop/closed-loop control device (12) is performed by means of need-oriented selection of the respective functional modules (24), wherein
• the firmware (28) required for operating the open-loop/closed-loop control device (12) and determining the functionality thereof is loaded onto the open-loop/closed-loop control device (12), in particular an engine controller, as a function archive (30) of functional modules (24), and
• each functional module (24) that the function archive (30) contains implements at least one selected function of the open-loop/closed-loop control device (12), in particular of the engine control unit, in the process, and
• the function archive (30) is structured in successive blocks (38) and each block, apart from the first (38a) and the last (38b) archive block, has in each case one header (39a), wherein the header (39a) contains all the information relevant for unpacking the function archive, such as in particular a type, total length, size, version, data rate, origin and/or addressee, and has the actual content of the respective functional module (24) and the CRC fields, used for data protection, for header (39a) and data (39b) and wherein there is provision for at least one descriptor (49) that takes available descriptions of the individual functional modules as a basis for creating a functional and/or technical description (48) of the firmware (28), formed as a function archive of functional modules, of the open-loop/closed-loop control device, in particular of the properties of the individual blocks (38) of the function archive (30), and stores said description on a data memory (16, 22), wherein the description (48) of the firmware (28) formed as a function archive of functional modules is transferred together with the firmware (28) to one or more open-loop/closed-loop control devices.

11. Method according to Claim 10, **characterized in that** the loading process comprises the transferring and unpacking of the function archive (30) and the installation of the functional modules (24) and corresponding implementation of the applicable functions in the open-loop/closed-loop control device (12) .

12. Method according to either of Claims 10 and 11, **characterized in that** the loading and configuring of the function archive (30) and accordingly of the firmware (28) into the open-loop/closed-loop control device is performed by means of a configuration tool that is advantageously integrable into the access means (14) .

13. Method according to one of Claims 10 to 12, **characterized in that** the loading, unpacking and installing of the applicable functional modules (24) and implementing of the previously selected functions is performed by means of a basic component of the open-loop/closed-loop control device (12).

14. Method according to one of Claims 10 to 13, **characterized in that** the configuration of the open-loop/closed-loop control device (12) results in the respectively required functions and/or functionalities being selected in preparation for the method, in particular from a database (18) of the data memory (16) by means of an appropriate interface.

## Revendications

1. Système de fonctionnalisation, en fonction des besoins, de dispositifs de commande/régulation (12), en particulier d'un appareil de commande de moteur, comprenant au moins un moyen d'intervention (14) pour intervenir sur au moins une première mémoire de données (16), ainsi qu'au moins un dispositif de commande/régulation (12), l'au moins une première mémoire de données (16) présentant au moins un module fonctionnel (24) par le biais duquel une ou plusieurs fonctions du dispositif de commande/régulation respectif (12) peuvent être effectuées, et au moins un module fonctionnel (24) pouvant être chargé de manière sélective dans l'au moins un dispositif de commande/régulation (12) par coopération du moyen d'intervention (14) et de l'au moins une première mémoire de données (16) et la fonctionnalité globale du dispositif de commande/régulation (12) respectif pouvant être adaptée de manière flexible par sélection, en fonction des besoins, d'un ou plusieurs modules fonctionnels (24), en effectuant un choix de fonctions préparatoires selon les besoins à partir de plusieurs fonctions offertes et en sélectionnant de manière automatisée les modules fonctionnels appartenant aux fonctions respectives, le moyen d'intervention (14) créant une archive de fonctions (30) à l'aide d'au moins un module fonctionnel sélectionné (24), dans laquelle l'au moins un module fonctionnel sélectionné (24) est prévu pour être transmis, et l'archive de fonctions (30) étant structurée dans des blocs successifs (38) et chaque bloc présentant, à l'exception du premier (38a) et du dernier (38b) bloc d'archives de fonctions, à chaque fois un en-tête (39a), l'en-tête (39a) contenant toutes les informations pertinentes pour la décompression de l'archive de fonctions, comme notamment le type, la longueur totale, la taille, la version, la vitesse des données, l'origine et/ou le destinataire, et présentant le contenu proprement dit du module fonctionnel respectif (24) et les champs CRC utilisés pour une sécurisation des données pour l'en-tête (39a) et les données (39b), et au moins un descripteur (49) étant prévu, lequel, à l'aide des descriptions existantes des modules fonctionnels individuels, crée une description fonctionnelle et/ou technique (48) du firmware (28) formé en tant qu'archive de fonctions de modules fonctionnels du dispositif de commande/régulation, en particulier des propriétés des blocs individuels (38) de l'archive de fonctions (30) et les mémorise sur une mémoire de données (16, 22), la description (48) du firmware (28) formé en tant qu'archive de fonction de modules fonctionnels étant transmise conjointement avec le firmware (28) à un ou plusieurs dispositifs de commande/régulation.

2. Système selon l'une quelconque des revendications précédentes, **caractérisé en ce que** le dispositif de commande/régulation (12) présente une mémoire de données (22) qui est réalisée notamment sous forme de mémoire morte persistante ou non volatile et/ou sous forme de mémoire à semi-conducteurs.

3. Système selon l'une quelconque des revendications précédentes, **caractérisé en ce qu'**il est prévu au moins une interface matérielle et/ou logicielle pour l'échange de données et pour la communication entre l'au moins une première mémoire de données (16) et l'au moins un moyen d'intervention (14) ainsi que l'au moins un dispositif de commande/régulation (12) .

4. Système selon l'une quelconque des revendications 1 à 3, **caractérisé en ce que** l'archive de fonctions (30) est mémorisée sur l'au moins une première mémoire de données (16) et/ou les modules fonctionnels individuels (24) sont déposés sous forme compactée et/ou comprimée dans l'archive de fonctions (30).

5. Système selon l'une quelconque des revendications précédentes, **caractérisé en ce qu'**un outil de configuration (32) est prévu, lequel peut être intégré dans le moyen d'intervention (14), et avec lequel le firmware (28) nécessaire pour le fonctionnement du dispositif de commande/régulation (12) et déterminant sa fonctionnalité peut être configuré en tant qu'archive de fonctions (30) de modules fonctionnels (24) et/ou peut être transmis et/ou chargé sur le dispositif de commande/régulation (12).

6. Système selon l'une quelconque des revendications précédentes, **caractérisé en ce que** le dispositif de commande/régulation (12) présente un composant de base (26) qui déballe et/ou installe les modules fonctionnels individuels (24) lors de l'opération de transfert/chargement respective et implémente ainsi les fonctions correspondantes dans le dispositif de commande/régulation respectif (12), en particulier dans un appareil de commande de moteur.

7. Système selon l'une quelconque des revendications précédentes, **caractérisé en ce qu'**au moins un moyen de contrôle (36) est prévu, lequel contrôle les modules fonctionnels sélectionnés (24) et/ou leurs fonctions en termes de dépendances et/ou de connexions et/ou effectue à l'aide des dépendances et/ou des connexions déterminées, un contrôle de plausibilité en rapport avec la complétude des modules fonctionnels sélectionnés (24).

8. Système selon la revendication 7, **caractérisé en ce que** le moyen de contrôle (36) signale et/ou indique si des modules fonctionnels (24) nécessaires en raison de dépendances et/ou de connexions existantes, ne sont pas sélectionnés.

9. Système selon l'une quelconque des revendications 7 ou 8, **caractérisé en ce que** le moyen de contrôle (36) sélectionne automatiquement les modules fonctionnels nécessaires (24) sur la base de dépendances et/ou de connexions existantes.

10. Procédé de fonctionnalisation, en fonction des besoins, de dispositifs de commande/régulation (12) dans lequel, par étapes,
- à l'aide d'une sélection de fonctions effectuée de manière préparatoire selon les besoins, un ou plusieurs modules fonctionnels (24) déposés sur au moins une première mémoire de données (16), en particulier une banque de données (18), sont sélectionnés,
- sur la base des modules fonctionnels sélectionnés (24), au moins une archive de fonctions (30) est créée et
- l'archive de fonctions (30) créée est chargée dans au moins un dispositif de commande/régulation (12), en particulier dans une mémoire de données (22) du dispositif de commande/régulation respectif (12), de sorte que les modules fonctionnels associés (24) et les fonctions prises pour base dans le dispositif de commande/régulation (12) puissent être implémentés et qu'une adaptation flexible de la fonctionnalité totale du dispositif de commande/régulation respectif (12) soit effectuée par sélection, en fonction des besoins, des modules fonctionnels respectifs (24),
- le firmware (28) nécessaire pour le fonctionnement du dispositif de commande/régulation (12) et déterminant sa fonctionnalité étant chargé en tant qu'archive de fonctions (30) de modules fonctionnels (24) sur le dispositif de commande/régulation (12), en particulier un contrôleur de moteur, et
- chaque module fonctionnel (24) contenu dans l'archive de fonctions (30) mettant en oeuvre dans ce cas au moins une fonction sélectionnée du dispositif de commande/régulation (12), en particulier de l'appareil de commande de moteur et
- l'archive de fonctions (30) étant structurée en blocs successifs (38) et chaque bloc, à l'exception du premier (38a) et du dernier (38b) bloc d'archives de fonctions, présentant à chaque fois un en-tête (39a), l'en-tête (39a) contenant toutes les informations pertinentes pour la décompression de l'archive de fonctions, comme notamment le type, la longueur totale, la taille, la version, la vitesse des données, l'origine et/ou le destinataire, et présentant le contenu proprement dit du module fonctionnel respectif (24) et les champs CRC utilisés pour une sécurisation des données pour l'en-tête (39a) et les données (39b), et au moins un descripteur (49) étant prévu, lequel, à l'aide des descriptions existantes des modules fonctionnels individuels, crée une description fonctionnelle et/ou technique (48) du firmware (28) formé en tant qu'archive de fonctions de modules fonctionnels du dispositif de commande/régulation, en particulier des propriétés des blocs individuels (38) de l'archive de fonctions (30) et les mémorise sur une mémoire de données (16, 22), la description (48) du firmware (28) formé en tant qu'archive de fonction de modules fonctionnels étant transmise conjointement avec le firmware (28) à un ou plusieurs dispositifs de commande/régulation.

11. Procédé selon la revendication 10, **caractérisé en ce que** l'opération de chargement comprend le transfert et la décompression de l'archive de fonctions (30) ainsi que l'installation des modules fonctionnels (24) et l'implémentation associée des fonctions correspondantes dans le dispositif de commande/régulation (12).

12. Procédé selon l'une quelconque des revendications 10 ou 11, **caractérisé en ce que** le chargement et la configuration de l'archive de fonctions (30) et par conséquent du firmware (28) dans le dispositif de commande/régulation sont effectués au moyen d'un outil de configuration qui peut être intégré avantageusement dans le moyen d'intervention (14).

13. Procédé selon l'une quelconque des revendications 10 à 12, **caractérisé en ce que** le chargement, la décompression et l'installation des modules fonctionnels correspondants (24) et l'implémentation des fonctions sélectionnées préalablement sont effectués au moyen d'un composant de base du dispositif de commande/régulation (12).

14. Procédé selon l'une quelconque des revendications 10 à 13, **caractérisé en ce que** lors de la configuration du dispositif de commande/régulation (12), les fonctions et/ou les fonctionnalités nécessaires dans chaque cas sont sélectionnées de manière préparatoire au procédé, en particulier à partir d'une banque de données (18) de la mémoire de données (16) au moyen d'interfaces correspondantes.
